# EUROPÄISCHE PATENTSCHRIFT

(11) **EP 0 999 321 B1**
(45) Veröffentlichungstag und Bekanntmachung des Hinweises auf die Patenterteilung: **04.12.2002**
(21) Anmeldenummer: 99118525.7
(22) Anmeldetag: 18.09.1999
(51) Int. Cl.: E04F 15/04, F16B 5/00

(54) **Fussbodenpaneel**
Floor panel
Panneau de plancher

(30) Priorität: 06.11.1998 DE 19851200
(43) Veröffentlichungstag der Anmeldung: 10.05.2000
(60) Teilanmeldung: 02019271.2
(73) Patentinhaber: Kronotex GmbH & Co. KG, 16909 Heiligengrabe (DE)
(72) Erfinder:
(74) Vertreter: Rehmann, Thorsten, Dipl.-Ing.

(56) Entgegenhaltungen:
- DE-A- 4 002 547
- DE-A- 4 242 530
- DE-A- 19 503 948
- FR-A- 1 581 384

## Beschreibung

Die Erfindung betrifft ein Fußbodenpaneel, das aufweist:
- eine erste Verbindungskante mit einem oberen Vorsprung der eine erste Anlagekante aufweist, einem unteren Vorsprung, der eine untere Vertiefung und eine untere Erhöhung aufweist, und einer zwischen dem oberen Vorsprung und dem unteren Vorsprung angeordneten Aussparung,
- eine an einer der ersten Verbindungskante gegenüberliegenden Seite angeordnete zweite Verbindungskante mit einer zweiten Anlagekante, und einer unterhalb der zweiten Anlagekante angeordneten Feder zum Einfügen in eine Aussparung einer anliegenden ersten Verbindungskante eines anderen Fußbodenpaneels, wobei an der Unterseite der Feder eine obere Erhöhung und eine neben der oberen Erhöhung angeordnete obere Vertiefung ausgebildet ist,
- wobei die untere Vertiefung zur Aufnahme in die obere Erhöhung und die Aussparung zur Aufnahme der unteren Erhöhung ausgebildet ist,
- und die Feder und die Aussparung in Richtung zum Boden der Aussparung sich verjüngend ausgebildet sind.

Ein derartiges Fußbodenpaneel ist aus der WO 97/47834 A1 (= US-A-6 006 486) Figuren 5 bis 7 oder Figuren 22 bis 25 bekannt. Mehrere solcher Fußbodenpaneele lassen sich miteinander verbinden, ohne daß sie z.B. auf dem Untergrund verklebt oder miteinander durch zusätzliche Verbindungsglieder wie z.B. Schienen verbunden werden müssen. Die Verbindungskanten zweier Fußbodenpaneele können dabei beispielsweise durch geradliniges Ineinanderschieben parallel zum Untergrund ineinander gefügt werden, wobei in diesem Fall zum Erreichen eines Formschlusses zwischen den Verbindungskanten der untere Vorsprung der ersten Verbindungskante während des Zusammenfügens nach unten weggebogen werden muß und er anschließend aufgrund seiner elastischen Wirkung wieder in seine Ausgangsstellung zurückschnappt und dabei den oberen Vorsprung an der Unterseite der Feder hintergreift, so daß die beiden Verbindungskanten nicht durch einfaches geradliniges Auseinanderziehen wieder getrennt werden können. Zum anderen ist es möglich, die zweite Verbindungskante in einer bogenförmigen Bewegung in die erste Verbindungskante einzuführen. Hierdurch kann die Biegebewegung des unteren Vorsprungs relativ geringer gehalten werden und dennoch eine Stabilität der Verbindung der beiden Kanten gegen ein laterales Auseinanderziehen zu erreicht werden.

Problematisch an derartigen Verbindungskanten ist jedoch grundsätzlich, daß beim Anfügen eines weiteren Fußbodenpaneels ein bereits verlegtes Fußbodenpaneel deutlich angehoben werden muß, da das bereits verlegte Fußbodenpaneel in der Regel bereits mit weiteren Fußbodenpaneelen verbunden ist und sich somit nur schwer vom Untergrund abheben läßt. Bei allzu starker Belastung des unteren Vorsprungs und/oder der Feder kann dabei eine Verbindungskante beschädigt werden. Weiterhin muß eine gute Dichtwirkung nicht nur bei den an der Oberseite der Verbindungskanten angeordneten Anlagekanten, sondern auch gegenüber dem Untergrund gewährleistet werden, was gegebenenfalls problematisch sein kann und tendenziell eine hohe Verspannung der beiden Verbindungskanten im unteren Bereich zwischen dem unteren Vorsprung der ersten Verbindungskante und der Feder der zweiten Verbindungskante zur Folge hat. Weiterhin ist eine Herstellung der Verbindungskanten bei komplexer Formgebung, insbesondere innerhalb der Aussparung, in der Regel fertigungstechnisch schwierig, insbesondere ist die Führung der zur Ausbildung der Verbindungskanten notwendigen Fräser aufwendig, was zu einem höheren Verschleiß in den Bereichen der aufwendigen Führung führen kann.

Der Erfindung liegt die Aufgabe zugrunde, ein Fußbodenpaneel zu schaffen, die eine gute Verlegbarkeit und gute Dichtwirkung der Verbindungskanten ermöglicht und dennoch mit relativ geringem Aufwand kostengünstig herzustellen ist.

Diese Aufgabe wird gelöst, indem
- die Feder an ihrer Unterseite eine obere Zusatzerhöhung und eine obere Zusatzvertiefung aufweist,
- der untere Vorsprung eine untere Zusatzerhöhung zum Einfügen in eine obere Zusatzvertiefung und eine untere Zusatzvertiefung zur Aufnahme der oberen Zusatzerhöhung eines anderen Fußbodenpaneels aufweist, und
- die untere Erhöhung, untere Zusatzerhöhung, untere Vertiefung und untere Zusatzvertiefung am unteren Vorsprung außerhalb der Aussparung und an einer weiter zum äußeren Ende der ersten Verbindungskante gelegenen Position als die erste Anlagekante angeordnet sind.

Durch die Ausbildung der unteren Zusatzerhöhung und oberen Zusatzerhöhung, die entsprechend in eine untere Zusatzvertiefung und eine obere Zusatzvertiefung anliegender andere Verbindungskanten eingefügt werden können, kann durch die obere Erhöhung, obere Zusatzerhöhung, obere Vertiefung, obere Zusatzvertiefung, untere Erhöhung, untere Vertiefung, untere Zusatzerhöhung und untere Zusatzvertiefung mit relativ geringem Aufwand ein Dichtlabyrinth erreicht werden, das eine gute Abdichtung auch gegenüber dem Untergrund gewährleistet. Somit kann zum einen eine gute Abdichtung erreicht werden und zum anderen die Auflagekraft auf mehrere Punkte oder Flächen verteilt werden, so daß eine gute Haltbarkeit der Verbindung auch bei Einwirkung höherer Kräfte und Verspannungen auf überraschend einfache Weise möglich ist. Da nicht nur die obere Erhöhung, obere Zusatzerhöhung, obere Vertiefung und obere Zusatzvertiefung an der Unterseite der Feder der zweiten Verbindungskante, sondern auch die untere Erhöhung, untere Zusatzerhöhung, untere Vertiefung und untere Zusatzvertiefung an gut exponierten Positionen angeordnet sind, nämlich außerhalb der Aussparung und weiter außen als die erste Anlagekante, können diese Formgebungen sehr genau mit relativ geringem Aufwand hergestellt werden, so daß sich ein relativ geringer Verschleiß des Werkzeugs bzw. der Fräsmaschine und ein relativ geringer Aufwand bei der Herstellung ergibt.

Da die Vertiefungen, Zusatzvertiefungen, Erhöhungen und Zusatzerhöhungen außerhalb der Aussparung und weiter außen als die Anlagekanten ausgebildet sind, kann die zweite Verbindungskante beim Zusammenfügen in diesem Bereich leicht angehoben werden, ohne daß hierbei die Feder bereits fest in der Aussparung anliegt, so daß ein leichtes Ausheben der zweiten Verbindungskante ohne Verformen oder ohne allzu großes Verformen der Verbindungskanten möglich ist.

Indem die Feder und die Aussparung sich in Richtung zum Boden der Aussparung verjüngen, wird eine Selbstzentrierung der Verbindungskanten erreicht. Vorteilhafterweise ist dabei die Aussparung entlang ihrer ganzen Erstreckung sich verjüngend ausgebildet und insbesondere auch die Feder entlang zumindest des Bereichs der Aussparung oder auch entlang ihrer ganzen Erstreckung sich verjüngend ausgebildet. Hierdurch wird eine gute Selbstzentrierung und somit Krafteinteilung und Kraftverteilung in Längsrichtung der Aussparung und vertikaler Richtung erreicht und der Einfügevorgang erleichtert. Hierdurch ist auch die Gefahr von Beschädigungen der Feder oder eines Vorsprungs durch die gute Einfügbarkeit und Kraftverteilung verringert.

Somit kann insbesondere auch ein Verbindungsprofil an dem unteren Vorsprung und der Feder hergestellt werden, bei der ein Formschluß mit vier Dichtflächen ausgebildet wird, so daß eine sehr gute Dichtwirkung erreicht werden kann und die Abstützung am unteren Anlagepunkt auf eine große Fläche verteilt werden kann, ohne daß der untere Vorsprung beim Zusammenfügen deutlich herausgebogen werden muß. Da bei einer derartigen Verbindung jedoch grundsätzlich entweder noch ein geringes Aufbiegen des unteren Vorsprung oder eine bogenförmige Relativbewegung der Verbindungskanten zueinander notwendig ist, eignet sich diese Verbindung insbesondere für eine Längskante eines Fußbodenpaneels. Somit können die Fußbodenpaneele zusammengesteckt werden, indem zunächst die Längskanten ineinander gefügt werden und anschließend durch Längsverschieben des weiteren Fußbodenpaneels eine Verbindung der Querkante mit einem weiteren Fußbodenpaneel erreicht wird.

Indem die Ober- und Unterseite der Feder und der Aussparung als zueinander geneigte ebene Flächen ausgebildet werden, kann zum einen eine sehr gute Selbstzentrierung und ein gleichmäßiger, glatter Einfügevorgang der Verbindungskanten beim Zusammenfügen erreicht werden und zum anderen auch eine gute Dichtwirkung und Krafteinleitung in der Verbindung erreicht werden. Hierdurch wird die Gefahr einer Beschädigung der Feder und/oder eines Vorsprungs beim Einfügen oder aufgrund einer späteren Belastung weiter verringert. Eine sich verjüngende Feder mit ebenen, zueinander geneigten Flächen besitzt dabei eine sehr hohe Stabilität. Die Aussparung ist dabei insbesondere als Nut ausgebildet, so daß ein Feder-Nut-Eingriff ermöglicht wird.

Eine Querkante kann vorteilhafterweise ausgebildet werden, indem die Erhöhungen und Zusatzerhöhungen abgerundet ausgebildet werden. Somit wird zwar im allgemeinen keine so große Dichtfläche erreicht, wie es bei nicht abgerundeten Erhöhungen möglich ist, jedoch wird die geradlinige Ineinanderfügbewegung erleichtert, wobei immerhin noch vier Verbindungspunkte zwischen dem oberen Profil und dem unter Profil verbleiben, die eine gute Dichtwirkung gewährleisten. Die Erhöhungen können dabei sogar so gewählt werden, daß keine oder praktisch keine Ausbiegung des unteren Vorsprungs zum Untergrund hin notwendig ist.

Die Erfindung wird im folgenden anhand der beiliegenden Zeichnungen an einigen Ausführungsformen näher erläutert. Es zeigen:
- **Figur 1**: eine Schnittansicht zweier Verbindungskanten gemäß einer ersten Ausführungsform der Erfindung beim Zusammenfügen;
- **Figur 2**: die Verbindungskanten aus **Figur 1** nach dem Zusammenfügen;
- **Figur 3**: zwei Verbindungskanten gemäß einer zweiten Ausführungsform der Erfindung beim Zusammenfügen;
- **Figur 4**: die beiden Verbindungskanten aus Figur 3 nach dem Zusammenfügen;
- **Figur 5**: ein Fußbodenpaneel in Schnittdarstellung zusammen mit den zur Ausbildung der Verbindungskanten notwendigen Werkzeugen.

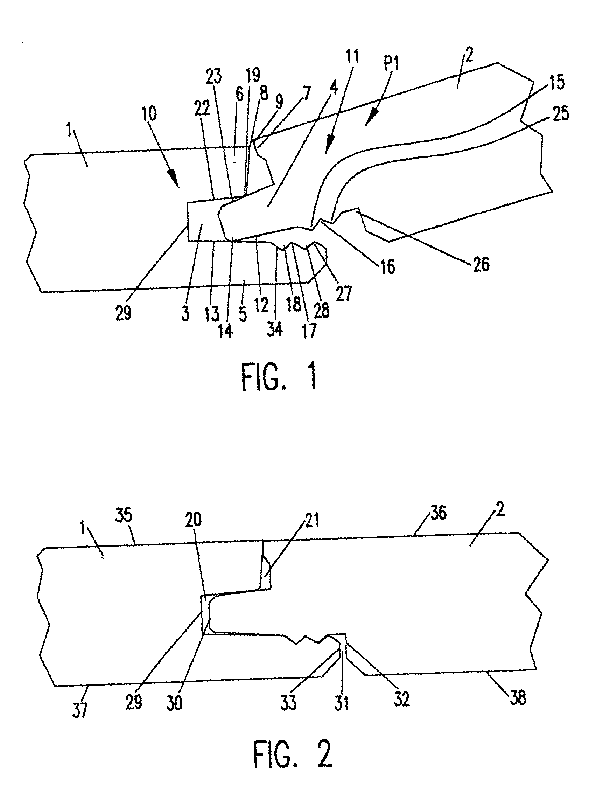

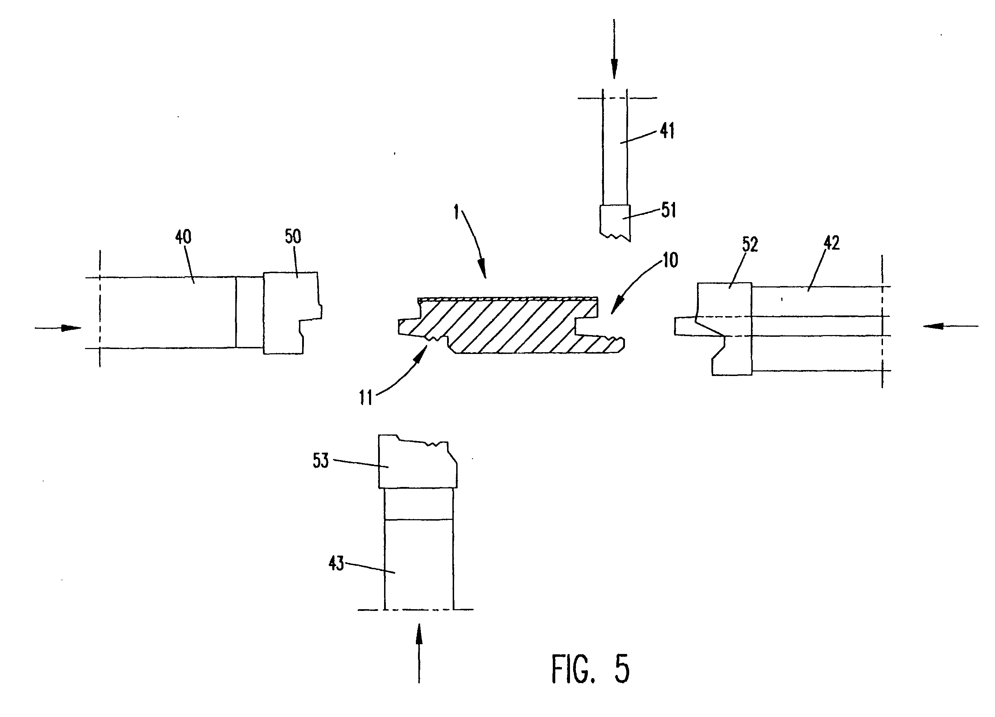

Ein Verbindungspaneel 1 weist gemäß **Figur 5** eine erste Verbindungskante 10 und auf der gegenüberliegenden Seite eine zweite Verbindungskante 11 auf. Die beiden Verbindungskanten sind dabei so ausgebildet, daß sie zum gegenseitigen Eingriff ineinander geeignet sind, wie es in **Figur 1** und **2** gezeigt ist. Die erste Verbindungskante 10 des Fußbodenpaneels 1 weist dabei einen oberen Vorsprung 6, einen unteren Vorsprung 5 sowie eine zwischen den beiden Vorsprüngen angeordnete Nut 3 auf. Am oberen Ende des oberen Vorsprungs 6 ist eine Anlagekante 8 ausgebildet. Die Nut 3 weist einen Nutgrund 29 auf und wird durch die Oberseite 13 des unteren Vorsprungs 5 sowie die Unterseite 22 des oberen Vorsprungs 6 begrenzt, wobei die Unterseite 22 des oberen Vorsprungs 6 und die Oberseite 13 des unteren Vorsprungs 5 zum Nutgrund 29 hin geneigt verlaufen, so daß die Nut 3 zum Nutgrund 29 hin sich verjüngt. Am äußeren Ende des unteren Vorsprungs 5 ist ein Verbindungsprofil ausgebildet, das eine untere Erhöhung 27 und eine in Richtung Nutgrund 29 daneben ausgebildete untere Vertiefung 28 aufweist. Erfindungsgemäß ist neben der unteren Vertiefung 28 eine untere Zusatzerhöhung 17 sowie eine zum Nutgrund hin daneben ausgebildete untere Zusatzvertiefung 18 vorgesehen. Dabei liegen sowohl die untere Erhöhung als auch die untere Zusatzerhöhung 17 vorteilhafterweise im wesentlichen auf der Linie der Verlängerung der Oberseite 13 des unteren Vorsprungs 5, sie können jedoch auch etwas darüber hinausragen.

Das Fußbodenpaneel 2 weist an seiner zweiten Verbindungskante 11 eine Feder 4 auf, die zum Einfügen bzw. Eingriff in die Nut 3 geeignet ist. Oberhalb der Feder 4 ragt ein Anschlußsteg 7 nach außen hervor, an dessen Außenseite eine zweite Anlagekante 9 ausgebildet ist, die bei einer Verbindung der beiden Verbindungskanten an der ersten Anlagekante 8 des ersten Fußbodenpaneels 1 anliegt. Die Feder 4 weist zumindest im wesentlichen ebene, vorzugsweise ganz ebene Oberseite 23 und Unterseite 12 auf, die in Richtung zur Federvorderseite 30 hin geneigt aufeinander zulaufen, so daß die Feder 4 sich verjüngend ausgebildet ist. An der Unterseite der Feder 4 ist ein zweites Verbindungsprofil ausgebildet, das eine obere Vertiefung 26 aufweist, die das untere Ende der Feder 4 definiert, sowie eine neben der oberen Vertiefung 26 ausgebildete obere Erhöhung 25. Erfindungsgemäß sind weiterhin eine obere Zusatzerhöhung 15 neben der oberen Erhöhung 25 sowie zwischen der oberen Erhöhung 25 und der oberen Zusatzerhöhung 15 eine obere Zusatzvertiefung 16 ausgebildet.

Die beiden Verbindungskanten 10 und 11 der Fußbodenpaneele 1 und 2 werden gemäß dem Pfeil P1 der Figur 1 durch eine bogenförmige Relativbewegung ineinandergefügt. Dabei liegt das Fußbodenpaneel 1 mit der ersten Verbindungskante 10 vorteilhafterweise bereits auf dem Untergrund auf, so daß das zweite Fußbodenpaneel 2 mit der zweiten Verbindungskante 11 gemäß dem Pfeil P1 durch die bogenförmige Bewegung eingesetzt werden kann. Dabei wird die Feder 4 in die Nut 3 eingeführt, wobei die Oberseite 23 der Feder 4 an einem ersten Gleitpunkt 19 des oberen Vorsprungs 6 entlanggleiten kann und ein unterer Gleitpunkt 14 an der Federunterseite an der Oberseite 13 des unteren Vorsprungs 5 entlanggleiten kann. Zumindest in der Endphase der Einführbewegung können dabei die Anlagekanten 8, 9 aneinanderliegen, so daß sich eine im wesentlichen kreisförmige Einführbewegung ergibt, bis die beiden Verbindungskanten 10, 11 gemäß Figur 2 ineinandergefügt sind.

Im ineinandergefügten Zustand gemäß Figur 2 bilden die Oberseiten 35, 36 sowie die Unterseiten 37, 38 der Fußbodenpaneele 1, 2 gerade Linien aus, wobei inbesondere die Oberseiten 35, 36 eine unterbrechungsfreie Linie bilden. Die beiden Fußbodenpaneele 1, 2 liegen insbesondere an ihren Anlagekanten 8, 9 im oberen Bereich sowie im unteren Bereich in den beiden Verbindungsprofilen aneinander. Dabei bilden sich ein oberer Freiraum 21 zwischen den Anlagekanten und dem durch den Gleitpunkt 19 und der Federoberseite 23 gebildeten Kontaktpunkt heraus, sowie ein unterer Freiraum 20 zwischen dem Nutgrund 29 und der Federvorderseite 30. In diese Freiräume 20, 21 können insbesondere Partikel wie Staub etc., die an den Verbindungskanten vor dem Zusammenfügen anlagen, gedrückt werden, ohne daß hierdurch die Verbindung zwischen den beiden Fußbodenpaneelen gestört wird. An den Unterseiten ist zwischen einer im wesentlichen vertikal verlaufenden unteren Kante 32 der zweiten Verbindungskante 11 und einer ebenfalls im wesentlichen vertikal verlaufenden unteren Kante 33 am unteren Vorsprung 5 der ersten Verbindungskante 10 ein Abstand 31 ausgebildet, so daß die Anlage im unteren Bereich durch die beiden Verbindungsprofile gewährleistet wird. Hierbei liegen die untere Erhöhung 27 des unteren Vorsprungs 5 in der oberen Vertiefung 26, die untere Zusatzerhöhung 17 in der oberen Zusatzvertiefung 16, die obere Erhöhung 25 in der unteren Vertiefung 28 sowie die obere Zusatzerhöhung 15 in der unteren Zusatzerhöhung 18 formschlüssig an. Die obere Zusatzerhöhung 15 liegt dabei mit einer Flanke an einer unteren Zusatzanlagefläche 34 des unteren Vorsprungs 5 an.

Somit wird eine stabile Verbindung gewährleistet, bei der eine gute Abdichtung zwischen den Anlagekanten 8, 9 an den Oberseiten sowie eine stabile und sehr dichte Verbindung durch die beiden Verbindungsprofile im unteren Bereich erreicht wird. Aufgrund der guten Dichtwirkung von vier Kontaktflächen zwischen dem unteren Vorsprung 5 und der Feder 4 wird ein Eindringen von Schmutz, Feuchtigkeit etc. in die innere Verbindung verhindert. Die Kraft kann auf diese vier Verbindungsflächen verteilt werden, so daß die Erhöhungen und Zusatzerhöhungen selbst relativ klein ausgebildet werden können und dennoch ein laterales Auseinanderziehen gut verhindert wird. Die beiden Fußbodenpaneele 1, 2 können mit einer relativ geringen Verspannung oder sogar mit gar keiner Verspannung verbunden werden, was die Gefahr einer Materialermüdung verringert. Da die Erhöhungen und Zusatzerhöhungen relativ klein ausgebildet werden können, ist ein bewußtes Auseinanderführen der beiden Verbindungskanten in Gegenrichtung entlang Pfeil P1 ohne all zu große Hebelwirkung für die Feder 4 möglich, so daß ein Abbrechen des unteren Vorsprungs 5 und/oder der Feder 4 verhindert werden kann.

Die in den **Figuren 1** und **2** gezeigte Verbindung eignet sich insbesondere für die Längskante von Fußbodenpaneelen 1, 2, da hier die beiden Paneele gemäß der Pfeilbewegung P1 ineinandergeführt werden können und anschließend in Längsrichtung der Fußbodenpaneele weitergeführt werden können, bis die Querkante des Fußbodenpaneels 2 an eine andere Querkante eines anderen Fußbodenpaneels zum Anliegen kommt.

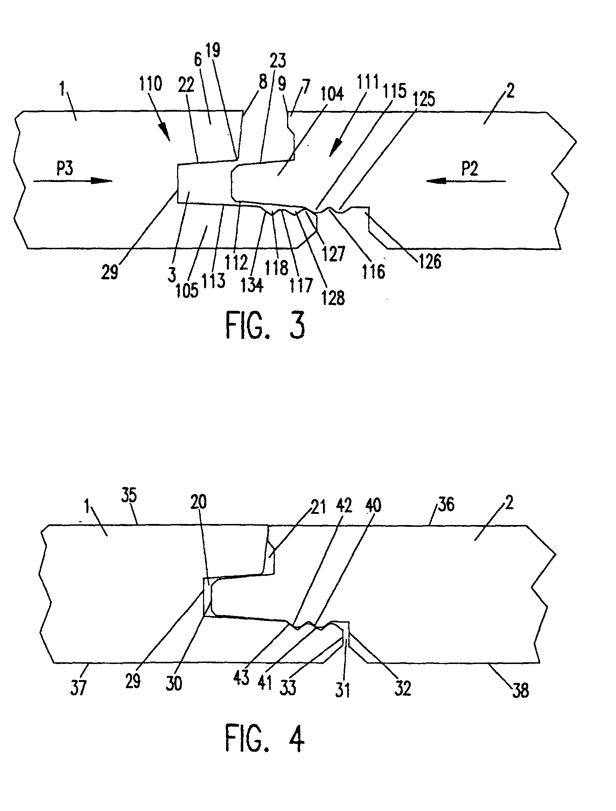

Bei der Ausführungsform der **Figur 3** entsprechen einige Teile der Verbindungskanten 110, 111 denjenigen aus **Figur 1** und **2**. Die erste Verbindungskante 110 des ersten Fußbodenpaneels 1 weist dementsprechend einen oberen Vorsprung 6, einen unteren Vorsprung 105 und eine hierdurch ausgebildete Nut 3 auf. Das Verbindungsprofil der ersten Verbindungskante 110 weist eine untere Erhöhung 127, eine daneben zum Nutgrund hin angeordnete untere Vertiefung 128, eine daneben angeordnete untere Zusatzerhöhung 117 sowie eine neben ihr angeordnete untere Zusatzvertiefung 118 auf, die wiederum zum Nutgrund 29 hin durch eine untere zusatzanlagefläche 134 begrenzt ist. Die zweite Verbindungskante 111 weist eine Feder 104 auf, an deren Unterseite eine obere Vertiefung 126 das untere Ende der Feder 104 definiert. Neben der oberen Vertiefung 126 ist eine obere Erhöhung 125, eine neben ihr angeordnete obere Zusatzvertiefung 116 sowie eine obere Zusatzerhöhung 115 ausgebildet, wobei die obere Zusatzvertiefung 116 zwischen der oberen Erhöhung 125 und der oberen Zusatzerhöhung 115 ausgebildet ist.

Die Höhe der Vertiefungen und Zusatzvertiefungen der Figuren 1, 2 kann beispielsweise ein bis zwei Zwanzigstel der Gesamthöhe der Fußbodenpaneele entsprechen, in Figur 3, 4 kann sie beispielsweise ein bis drei, vorzugsweise ein bis zwei Dreißigstel der Gesamthöhe der Fußbodenpaneele entsprechen.

Die beiden Fußbodenpaneele 1, 2 können gemäß den Pfeilen P2 und 3 durch eine geradlinige Relativbewegung ineinandergefügt werden, wobei die obere Erhöhung 125, die obere Erhöhung 115, die untere Erhöhung 127 und die untere Zusatzerhöhung 117 aneinandergleiten, was durch die Abrundungen erleichtert wird. Hierbei ist es grundsätzlich möglich, daß beim Ineinanderfügen der untere Vorsprung 105 bzw. auch die Feder 104 nicht weggebogen werden muß, es ist jedoch auch ein Ineinanderfügen mit einer leichten Aufbiegung insbesondere des unteren Vorsprungs 105 möglich. Gemäß Figur 4 liegen die beiden Kanten entsprechend derartig ineinander, daß Verbindungspunkte 40, 41, 42 und 43 zwischen den Verbindungskanten 110, 111 ausgebildet werden. Somit ergibt sich zwar keine ganz so gute Abdichtung wie durch die vier Verbindungsflächen der Figur 2, es ist jedoch ein Ineinanderschieben ohne bogenförmige Bewegung und dennoch eine gute Abdichtung durch die vier Kontaktpunkte möglich.

Die erfindungsgemäßen Verbindungskanten 10, 11, 110, 111 können gemäß **Figur 5** einfach hergestellt werden, indem entsprechende Fräsmaschinen oder andere Werkzeuge 40, 41, 42, 43 entlang der Pfeilrichtungen geradlinig direkt auf die Kanten bewegt werden, ohne daß kompliziertere hintergreifende Strukturen ausgeformt werden müssen und die Fräsmaschinen z.B. bogenförmig geführt werden müssen. Dies kommt insbesondere auch den Fräskopfen 50, 51, 52, 53 zugute, die somit eine geringere Abnutzung erfahren.

### Bezugszeichenliste

- 1, 2: Fußbodenpaneel
- 3: Nut
- 4, 104: Feder
- 5, 105: unterer Vorsprung
- 6: oberer Vorsprung
- 7: Anschlußsteg
- 8: erste Anlagekante (des Anschlußstegs)
- 9: zweite Anlagekante (des oberen Vorsprungs)
- 10, 110: erste Verbindungskante
- 11, 111: zweite Verbindungskante
- 12, 112: Unterseite der Feder
- 13, 113: Oberseite des unteren Vorsprungs
- 14: Gleitkante an Federunterseite
- 15, 115: obere Zusatzerhöhung in Feder
- 16, 116: obere Zusatzvertiefung in Feder
- 17, 117: untere Zusatzerhöhung in unterem Vorsprung
- 18, 118: untere Zusatzvertiefung in unterem Vorsprung
- 19: Gleitpunkt
- 20: unterer Freiraum
- 21: oberer Freiraum
- 22: Unterseite des oberen Vorsprungs
- 23: Oberseite der Feder
- 25, 125: obere Erhöhung in Feder
- 26, 126: obere Vertiefung
- 27, 127: untere Erhöung im unteren Vorsprung
- 28, 128: untere Vertiefung im unteren Vorsprung
- 29: Nutgrund
- 30: Federvorderseite
- 31: Abstand zum unteren Vorsprung und unterer Kante
- 32: untere Kante der zweiten Verbindungskante
- 33: untere Kante des unteren Vorsprungs
- 34: untere Zusatzanlagefläche
- 35 - 38: Ober- und Unterseite der Fußbodenpaneele 1, 2
- 40 - 43: Fräsmaschinen
- 45: unteres Verbindungsprofil
- 46: oberes Verbindungsprofil
- 50 - 53: Fräsköpfe

## Patentansprüche

1. Fußbodenpaneel, das aufweist:
- eine erste Verbindungskante (10, 110) mit einem oberen Vorsprung (6), der eine erste Anlagekante (8) aufweist, einem unteren Vorsprung (5, 105), der eine untere Vertiefung (28, 128) und eine untere Erhöhung (27, 127) aufweist, und einer zwischen dem oberen Vorsprung (6) und dem unteren Vorsprung (5, 105) angeordneten Aussparung (3),
- eine an einer der ersten Verbindungskante (10, 110) gegenüberliegenden Seite angeordnete zweite Verbindungskante (11, 111) mit einer zweiten Anlagekante (9), und einer unterhalb der zweiten Anlagekante (9) angeordneten Feder (4, 104) zum Einfügen in die Aussparung (3) einer anliegenden ersten Verbindungskante eines anderen Fußbodenpaneels, wobei an der Unterseite (12, 112) der Feder (4, 104) eine obere Erhöhung (25, 125) und eine neben der oberen Erhöhung (25, 125) angeordnete obere Vertiefung (26, 126) ausgebildet ist,
- wobei die untere Vertiefung (28, 128) zur Aufnahme in die obere Erhöhung (25, 125) und die obere Vertiefung (26) zur Aufnahme der unteren Erhöhung (27, 127) ausgebildet ist, und
- die Feder (4, 104) und die Aussparung (3, 103) in Richtung zum Boden (29) der Aussparung (3, 103) sich verjüngend ausgebildet sind,
**dadurch gekennzeichnet, daß**
- die Feder (4, 104) an ihrer Unterseite (12, 112) eine obere Zusatzerhöhung (15, 115) und eine obere Zusatzvertiefung (16, 116) aufweist,
- der untere Vorsprung (5, 105) eine untere Zusatzerhöhung (17, 117) zum Einfügen in eine obere Zusatzvertiefung (16, 116) und eine untere Zusatzvertiefung (18, 118) zur Aufnahme der oberen Zusatzerhöhung eines anderen Fußbodenpaneels aufweist, und
- die untere Erhöhung (27, 127), untere Zusatzerhöhung (17, 117), untere Vertiefung (28, 128) und untere Zusatzvertiefung (18, 118) am unteren Vorsprung (5, 105) außerhalb der Aussparung (3) und an einer weiter zum äußeren Ende der ersten Verbindungskante (10, 110) gelegenen Position als die erste Anlagekante (8) angeordnet sind.

2. Fußbodenpaneel nach Anspruch 1, **dadurch gekennzeichnet, daß** die Oberseite (23) und Unterseite (12) der Feder (4, 104) ebene, zueinander geneigte Flächen aufweisen und die Oberseite (13) des unteren Vorsprungs (5, 105) und die Unterseite (22) des oberen Vorsprungs (6) auch ebene, zueinander geneigte Flächen aufweisen.

3. Fußbodenpaneel nach Anspruch 1 oder 2, **dadurch gekennzeichnet, daß** die Oberseite (23) der Feder (4, 104) und die Unterseite (22) des oberen Vorsprungs (6) sowie die Unterseite (12, 112) der Feder (4, 104) und die Oberseite (13, 113) des unteren Vorsprungs (5, 105) bei Ineinanderfügenfügen der Verbindungskanten (10, 110; 11, 111) jeweils aneinanderliegen.

4. Fußbodenpaneel nach einem der Ansprüche 1 bis 3, **dadurch gekennzeichnet, daß** die erste Verbindungskante (10, 110) und zweite Verbindungskante (11, 111) derartig ausgebildet sind, daß sie ohne zeitweises Verformen ineinanderfügbar sind.

5. Fußbodenpaneel nach einem der Ansprüche 1 bis 4, **dadurch gekennzeichnet, daß** bei Ineinanderfügen einer ersten Verbindungskante (10, 110) und einer zweiten Verbindungskante (11, 111) ein oberer Freiraum (21) zwischen den Anlagekanten (8, 9) und der Feder (4, 104) sowie ein unterer Freiraum (20) zwischen einer Vorderseite (30) der Feder (4, 104) und einem Boden (29) der Aussparung (3) gebildet werden.

6. Fußbodenpaneel nach einem der Ansprüche 1 bis 5, **dadurch gekennzeichnet, daß** bei Ineinanderfügen einer ersten Verbindungskante (10, 110) und einer zweiten Verbindungskante (11, 111) zwischen einer unteren Kante (32) der zweiten Verbindungskante (11, 111) und einer unteren Kante (33) des unteren Vorsprungs (5, 105) ein Abstand (31) verbleibt.

7. Fußbodenpaneel nach einem der Ansprüche 1 bis 6, **dadurch gekennzeichnet, daß** bei Ineinanderfügen zweier Verbindungskanten (10, 11) die obere Erhöhung (25) und obere Zusatzerhöhung (15) der Feder (4) in der unteren Vertiefung (28) und unteren Zusatzvertiefung (8) des unteren Vorsprungs (5) sowie die untere Zusatzerhöhung (17) in die obere Zusatzvertiefung (16) der Feder (4) formschlüssig aufnehmbar sind.

8. Fußbodenpaneel nach Anspruch 7, **dadurch gekennzeichnet, daß** an der ersten Verbindungskante (10) am oberen Vorsprung (6) ein Gleitpunkt (19) zur Anlage an der Oberseite (23) der Feder (4) einer anliegenden zweiten Verbindungskante ausgebildet ist.

9. Fußbodenpaneel nach einem der Ansprüche 1 bis 6, **dadurch gekennzeichnet, daß** die obere Erhöhung (125) der Feder (104), die obere Zusatzerhöhung (115) der Feder (104), die untere Erhöhung (127) des unteren Vorsprungs (105) und die untere Zusatzerhöhung (117) des unteren Vorsprungs (105) abgerundet sind.

10. Fußbodenpaneel nach Anspruch 9, **dadurch gekennzeichnet, daß** die untere Zusatzerhöhung (17, 117) sich unterhalb oder auf einer Höhe mit einer Verlängerung der Oberseite (13, 113) des unteren Vorsprungs (5, 105) erstreckt.

11. Fußbodenpaneel nach Anspruch 9 oder 10, **dadurch gekennzeichnet, daß** die erste Verbindungskante (110) in einer zweiten Verbindungskante (111) eines anderen Fußbodenpaneels durch eine Relativverschiebung parallel zu den Unterseiten (37, 38) und/oder den Oberseiten (35, 36) der Fußbodenpaneelen einfügbar ist.

12. Fußbodenpaneel nach Anspruch 7 oder 8 und einem der Ansprüche 9 bis 11, **dadurch gekennzeichnet, daß** dessen Längsseiten Verbindungskanten (10, 11) aufweisen, deren Erhöhungen (25, 27) und Zusatzerhöhungen (15, 17) formschlüssig von einer anderen Verbindungskante (11, 10) eines anderen Fußbodenpaneels aufnehmbar sind und die Querkanten Verbindungskanten (110, 111) mit abgerundeten Erhöhungen (125, 127) und abgerundeten Zusatzerhöhungen (115, 117) aufweisen.

## Claims

1. Floor panel, which has:
- a first connecting edge (10, 110) with a top protrusion (6), which has a first abutment edge (8), a bottom protrusion (5, 105), which has a lower depression (28, 128) and a lower elevation (27, 127), and a groove (3), which is arranged between the top protrusion (6) and the bottom protrusion (5, 105),
- a second connecting edge (11, 111), which is arranged on a side located opposite the first connecting edge (10, 110) and which has a second abutment edge (9) and a tongue (4, 104), which is arranged beneath the second abutment edge (9) and is intended for introducing into the groove (3) of an abutting first connecting edge of another floor panel, the underside (12, 112) of the tongue (4, 104) having formed on it an upper elevation (25, 125) and an upper depression (26, 126), which is arranged alongside the upper elevation (25, 125),
- the lower depression (28, 128) being designed for accommodating in the upper elevation (25, 125) and the upper depression (26) being designed for accommodating the lower elevation (27, 127), and
- the tongue (4, 104) and the groove (3, 103) being designed to taper in the direction of the base (29) of the groove (3, 103),
**characterized in that**
- the tongue (4, 104), on its underside (12, 112), has an additional upper elevation (15, 115) and an additional upper depression (16, 116),
- the bottom protrusion (5, 105) has an additional lower elevation (17, 117) for introducing into an additional upper depression (16, 116), and an additional lower depression (18, 118) for accommodating the additional upper elevation, of another floor panel, and
- the lower elevation (27, 127), additional lower elevation (17, 117), lower depression (28, 128) and additional lower depression (18, 118) on the bottom protrusion (5, 105) are arranged outside the groove (3) and at a position which is closer to the outer end of the first connecting edge (10, 110) than the first abutment edge (8).

2. Floor panel according to Claim 1, **characterized in that** the top side (23) and underside (12) of the tongue (4, 104) have planar surfaces which are inclined towards one another, and the top side (13) of the bottom protrusion (5, 105) and the underside (22) of the top protrusion (6) also have planar surfaces which are inclined towards one another.

3. Floor panel according to Claim 1 or 2, **characterized in that** the top side (23) of the tongue (4, 104) and the underside (22) of the top protrusion (6) as well as the underside (12, 112) of the tongue (4, 104) and the top side (13, 113) of the bottom protrusion (5, 105) butt against one another in each case when the connecting edges (10, 110; 11, 111) are introduced one inside the other.

4. Floor panel according to one of Claims 1 to 3, **characterized in that** the first connecting edge (10, 110) and second connecting edge (11, 111) are designed such that they can be introduced one inside the other without temporarily deforming.

5. Floor panel according to one of Claims 1 to 4, **characterized in that**, when a first connecting edge (10, 110) and a second connecting edge (11, 111) are introduced one inside the other, a top free space (21) is formed between the abutment edges (8, 9) and the tongue (4, 104) and a bottom free space (20) is formed between a front side (30) of the tongue (4, 104) and a base (29) of the groove (3).

6. Floor panel according to one of Claims 1 to 5, **characterized in that**, when a first connecting edge (10, 110) and a second connecting edge (11, 111) are introduced one inside the other, a spacing (31) remains between a lower edge (32) of the second connecting edge (11, 111) and a lower edge (33) of the bottom protrusion (5, 105).

7. Floor panel according to one of Claims 1 to 6 **characterized in that**, when two connecting edges (10, 11) are introduced one inside the other, the upper elevation (25) and additional upper elevation (15) of the tongue (4) can be accommodated in a form-fitting manner in the lower depression (28) and additional lower depression (8) of the bottom protrusion (5), and the additional lower elevation (17) can be accommodated in a form-fiting manner in the additional upper depression (16) of the tongue (4).

8. Floor panel according to Claim 7, **characterized in that** formed on the first connecting edge (10), on the top protrusion (6), is a sliding point (19) for abutment against the top side (23) of the tongue (4) of an abutting second connecting edge.

9. Floor panel according to one of Claims 1 to 6, **characterized in that** the upper elevation (125) of the tongue (104), the additional upper elevation (115) of the tongue (104), the lower elevation (127) of the bottom protrusion (105) and the additional lower elevation (117) of the bottom protrusion (105) are rounded.

10. Floor panel according to Claim 9, **characterized in that** the additional lower elevation (17, 117) extends beneath, or level with, an extension of the top side (13, 113) of the bottom protrusion (5, 105).

11. Floor panel according to Claim 9 or 10, **characterized in that** the first connecting edge (110) can be introduced in a second connecting edge (111) of another floor panel by relative displacement parallel to the undersides (37, 38) and/or the top sides (35, 36) of the floor panels.

12. Floor panel according to Claim 7 or 8, and one of Claims 9 to 11, **characterized in that** its longitudinal sides have connecting edges (10, 11) of which the elevations (25, 27) and additional elevations (15, 17) can be accommodated in a form-fitting manner by another connecting edge (11, 10) of another floor panel, and the transverse edges have connecting edges (110, 111) with rounded elevations (125, 127) and rounded additional elevations (115, 117).

## Revendications

1. Panneau de plancher, comprenant :
- un premier bord de raccordement (10, 110) équipé d'une saillie supérieure (6) qui présente un premier bord d'appui (8), d'une saillie inférieure (5, 105) qui présente un renfoncement inférieur (28, 128) et un bossage inférieur (27, 127), et d'un évidement (3) entre la saillie supérieure (6) et la saillie inférieure (5, 105),
- un second bord de raccordement (11, 111), agencé d'un côté opposé au premier bord de raccordement (10, 110), et équipé d'un deuxième bord d'appui (9), et d'un tenon (4, 104) disposé en-dessous du deuxième bord d'appui (9) pour être inséré dans l'évidement (3) d'un premier bord de raccordement adjacent d'un autre panneau de plancher, un bossage supérieur (25, 125) et un renfoncement supérieur (26, 126) disposé à côté du bossage supérieur (25, 125) étant formés sur le côté inférieur (12, 112) du tenon (4, 104),
- le renfoncement inférieur (28, 128) étant formé pour être reçu dans le bossage supérieur (25, 125) et le renfoncement supérieur (26) pour recevoir le bossage inférieur (27, 127), et
- le tenon (4, 104) et l'évidement (3,103) étant formés en se rétrécissant en direction du fond (29) de l'évidement (3, 103),
**caractérisé en ce que**
- le tenon (4, 104) présente sur son côté inférieur (12, 112) un bossage additionnel supérieur (15, 115) et un renfoncement additionnel supérieur (16, 116),
- la saillie inférieure (5, 105) présente un bossage additionnel inférieur (17, 117) pour s'insérer dans un renfoncement additionnel supérieur (16, 116), et un renfoncement additionnel inférieur (18, 118) pour recevoir le bossage additionnel supérieur d'un autre panneau de plancher, et
- le bossage inférieur (27, 127), le bossage additionnel inférieur (17, 117), le renfoncement inférieur (28, 128) et le renfoncement additionnel inférieur (18, 118) sont disposés sur la saillie inférieure (5, 105) en-dehors de l'évidement (3) et en une position située plus loin vers l'extrémité extérieure du premier bord de raccordement (10, 110) que le premier bord d'appui (8).

2. Panneau de plancher selon la revendication 1, **caractérisé en ce que** les côtés supérieur (23) et inférieur (12) du tenon (4, 104) présentent des faces planes inclinées l'une vers l'autre, et le côté supérieur (13) de la saillie inférieure (5, 105) et le côté inférieur (22) de la saillie supérieure (6) présentent également des faces planes inclinées l'une vers l'autre.

3. Panneau de plancher selon la revendication 1 ou 2, **caractérisé en ce que** le côté supérieur (23) du tenon (4, 104) et le côté inférieur (22) de la saillie supérieure (6), ainsi que le côté inférieur (12, 112) du tenon (4, 104) et le côté supérieur (13, 113) de la saillie inférieure (5, 116), sont respectivement adjacents lorsqu'il y a assemblage des bords de raccordement (10, 110 ; 11, 111) l'un dans l'autre.

4. Panneau de plancher selon l'une des revendications 1 à 3, **caractérisé en ce que** le premier bord de raccordement (10, 110) et le second bord de raccordement (11, 111) sont formés de façon à être capables d'assemblage l'un dans l'autre sans déformation temporaire.

5. Panneau de plancher selon l'une des revendications 1 à 4, **caractérisé en ce que** lorsqu'il y a assemblage d'un premier bord de raccordement (10, 110) et d'un second bord de raccordement (11, 111) l'un dans l'autre, il est constitué un espace libre supérieur (21) entre les bords d'appui (8, 9) et le tenon (4, 104), ainsi qu'un espace libre inférieur (20) entre un côté avant (30) du tenon (4, 104) et un fond (29) de l'évidement (3).

6. Panneau de plancher selon l'une des revendications 1 à 5, **caractérisé en ce que** lorsqu'il y a assemblage d'un premier bord de raccordement (10, 110) et d'un second bord de raccordement (11, 111) l'un dans l'autre , il reste une distance (31) entre un bord inférieur (32) du second bord de raccordement (11, 111) et un bord inférieur (33) de la saillie inférieure (5, 105).

7. Panneau de plancher selon l'une des revendications 1 à 6, **caractérisé en ce que** lorsqu'il y a assemblage de deux bords de raccordement (10, 11) l'un dans l'autre, le bossage supérieur (25) et le bossage additionnel supérieur (15) du tenon (4) sont capables d'être reçus avec effet de verrouillage dans le renfoncement inférieur (28) et le renfoncement additionnel inférieur (8) de la saillie inférieure (5), alors que le bossage additionnel inférieur (17) est capable d'être reçu avec effet de verrouillage dans le renfoncement additionnel supérieur (16) du tenon (4).

8. Panneau de plancher selon la revendication 7, **caractérisé en ce qu'**au premier bord de raccordement (10), il est formé sur la saillie supérieure (6) un point de glissement (19) pour l'appui sur le côté supérieur (23) du tenon (4) d'un second bord de raccordement adjacent.

9. Panneau de plancher selon l'une des revendications 1 à 6, **caractérisé en ce que** le bossage supérieur (125) du tenon (104), le bossage additionnel supérieur (115) du tenon (104), le bossage inférieur (127) de la saillie inférieure (105) et le bossage additionnel inférieur (117) de la saillie inférieure (105) sont arrondis.

10. Panneau de plancher selon la revendication 9, **caractérisé en ce que** le bossage additionnel inférieur (17, 117) s'étend en-dessous ou à la hauteur d'un prolongement du côté supérieur (13, 113) de la saillie inférieure (5, 105).

11. Panneau de plancher selon la revendication 9 ou 10, **caractérisé en ce que en ce que** le premier bord de raccordement (110) est capable d'assemblage dans un second bord de raccordement (111) d'un autre panneau de plancher par un déplacement relatif parallèlement aux côtés inférieurs (37, 38) et/ou aux côtés supérieurs (35, 36) des panneaux de plancher.

12. Panneau de plancher selon la revendication 7 ou 8 et l'une des revendications 9 à 11, **caractérisé en ce que** ses côtés longitudinaux présentent des bords de raccordement (10, 11) dont les bossages (25, 26) et bossages additionnels (15, 17) sont capables d'être reçus avec effet de verrouillage par un autre bord de raccordement (11, 10) d'un autre panneau de plancher, et les bords transversaux présentent des bords de raccordement (110, 111) avec bossages (125, 127) arrondis et bossages additionnels (115, 117) arrondis.
